# EUROPEAN PATENT APPLICATION

(11) **EP 4 682 397 A1**
(43) Date of publication of application: **21.01.2026**
(21) Application number: 24192425.7
(22) Date of filing: 01.08.2024
(51) Int. Cl.: F16D 65/12, F16D 65/847

(54) **HUB ROTOR ASSEMBLY**

(30) Priority: 18.07.2024 US 202463673021 P
(71) Applicant: Volvo Truck Corporation, 405 08 Göteborg (SE)
(72) Inventor: Fulk, Daniel, 405 08 Göteborg (SE); Lamont, Michael, Stokesdale, 27357 (US); Inghram, Michael, Kernersville, 27284 (US)
(74) Representative: Valea AB

(57) **Abstract**

A hub rotor assembly for a vehicle includes a hub and a brake rotor. The hub includes a hub shaft and a plurality of male hub splines defining a plurality of hub contact surfaces. The brake rotor includes a plurality of female rotor splines arranged around a central opening of the brake rotor defining a plurality of rotor contact surfaces that engage the plurality of hub contact surfaces to define a plurality of hub rotor interfaces that rotationally fix the brake rotor with respect to the hub. Each hub rotor interface defines a plurality of air gaps between the respective plurality of hub contact surfaces and the respective plurality of rotor contact surfaces of the hub rotor interface to inhibit heat transfer between the brake rotor and the hub.

## Description

### TECHNICAL FIELD

The disclosure relates generally to a hub rotor assembly for a vehicle. In particular aspects, the disclosure relates to an interface between a vehicle hub and a brake rotor for reducing heat transfer between the rotor and the hub. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Conventional brake rotors may be fixed to vehicle hubs in a variety of ways. One effect of conventional arrangements is that an interface between the rotor and hub may transfer a significant amount of heat generated by braking operations from the rotor, which may be formed from cast iron, into the hub and other components of the vehicle, which may be formed from cast iron, aluminum, or other components. There is a need to reduce heat transfer between the rotor and the hub while maintaining the integrity of the fixed hub rotor interface.

### SUMMARY

According to a first aspect of the disclosure, a hub rotor assembly for a vehicle includes a hub including a hub shaft and a plurality of male hub splines defining a plurality of hub contact surfaces. The hub rotor assembly further includes a brake rotor including a plurality of female rotor splines arranged around a central opening of the brake rotor defining a plurality of rotor contact surfaces that engage the plurality of hub contact surfaces to define a plurality of hub rotor interfaces that rotationally fix the brake rotor with respect to the hub. Each hub rotor interface defines a plurality of air gaps between the respective plurality of hub contact surfaces and the respective plurality of rotor contact surfaces of the hub rotor interface to inhibit heat transfer between the brake rotor and the hub.

Optionally in some examples, including in at least one preferred example, the plurality of hub contact surfaces includes a plurality of radial outer contact surfaces of the plurality of male hub splines, and the plurality of rotor contact surfaces includes a plurality of radial inner contact surfaces between adjacent pairs of rotor splines of the plurality of female rotor splines.

Optionally in some examples, including in at least one preferred example, the plurality of hub contact surfaces includes a plurality of axial inner contact surfaces (136) between adjacent pairs of hub splines of the plurality of male hub splines, and the plurality of rotor contact surfaces includes a plurality of axial outer contact surfaces of the plurality of female rotor splines.

Optionally in some examples, including in at least one preferred example, each hub rotor interface includes a plurality of grooves defining the plurality of air gaps.

Optionally in some examples, including in at least one preferred example, each hub contact surface includes at least a subset of the plurality of grooves.

Optionally in some examples, including in at least one preferred example, each rotor contract surface includes at least a subset of the plurality of grooves.

Optionally in some examples, including in at least one preferred example, each hub rotor interface includes a surface finish of Ra > 6.3 µm.

Optionally in some examples, including in at least one preferred example, each hub contact surface includes the surface finish of Ra > 6.3 µm.

Optionally in some examples, including in at least one preferred example, each rotor contract surface includes the surface finish of Ra > 6.3 µm.

Optionally in some examples, including in at least one preferred example, each hub rotor interface includes a surface finish of Ra > 10 µm.

Optionally in some examples, including in at least one preferred example, the hub is formed from machined aluminum.

Optionally in some examples, including in at least one preferred example, the brake rotor is formed from cast iron.

Optionally in some examples, including in at least one preferred example, the hub rotor assembly comprises a plurality of retention clips to secure the brake rotor to the hub.

Optionally in some examples, including in at least one preferred example, the plurality of male hub splines and the plurality of female rotor splines define a plurality of thermal expansion gaps therebetween.

Optionally in some examples, including in at least one preferred example, each retention clip includes a protrusion for insertion into a respective thermal expansion gap.

According to a second aspect of the disclosure, a method of forming a hub rotor assembly for a vehicle includes machining a hub including a hub shaft and a plurality of male hub splines defining a plurality of hub contact surfaces. The method further includes machining a brake rotor including a plurality of female rotor splines arranged around a central opening of the brake rotor defining a plurality of rotor contact surfaces to engage the plurality of hub contact surfaces to define a plurality of hub rotor interface that rotationally fix the brake rotor with respect to the hub. Each hub rotor interface defines a plurality of air gaps between the respective hub surface and the respective rotor surface of the hub rotor interface to inhibit heat transfer between the brake rotor and the hub.

Optionally in some examples, including in at least one preferred example, the plurality of hub contact surfaces includes a plurality of radial outer contact surfaces of the plurality of male hub splines, and plurality of rotor contact surfaces includes a plurality of radial inner contact surfaces between adjacent pairs of rotor splines of the plurality of female rotor splines.

Optionally in some examples, including in at least one preferred example, the plurality of hub contact surfaces includes a plurality of axial inner contact surfaces between adjacent pairs of hub splines of the plurality of male hub splines, and the plurality of rotor contact surfaces includes a plurality of axial outer contact surfaces of the plurality of female rotor splines.

Optionally in some examples, including in at least one preferred example, the hub rotor assembly further includes, for each hub rotor interface, machining a plurality of grooves to define the plurality of air gaps.

Optionally in some examples, including in at least one preferred example, the hub rotor assembly further includes, for each hub rotor interface, machining a surface finish to define the plurality of air gaps.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIG. 1 is an exemplary disassembled view of a hub rotor assembly according to an example.
FIG. 2 is an exemplary assembled view of the hub rotor assembly of FIG. 1, according to an example.
FIGS. 3A and 3B are exemplary views of a vehicle hub and brake rotor, according to an example.
FIG. 4 is an exemplary view of a vehicle having a hub rotor assembly, according to an example.
FIG. 5 is a flow chart of an exemplary method to form a hub rotor assembly, according to an example.

### DETAILED DESCRIPTION

The detailed description set forth below provides information and examples of the disclosed technology with sufficient detail to enable those skilled in the art to practice the disclosure.

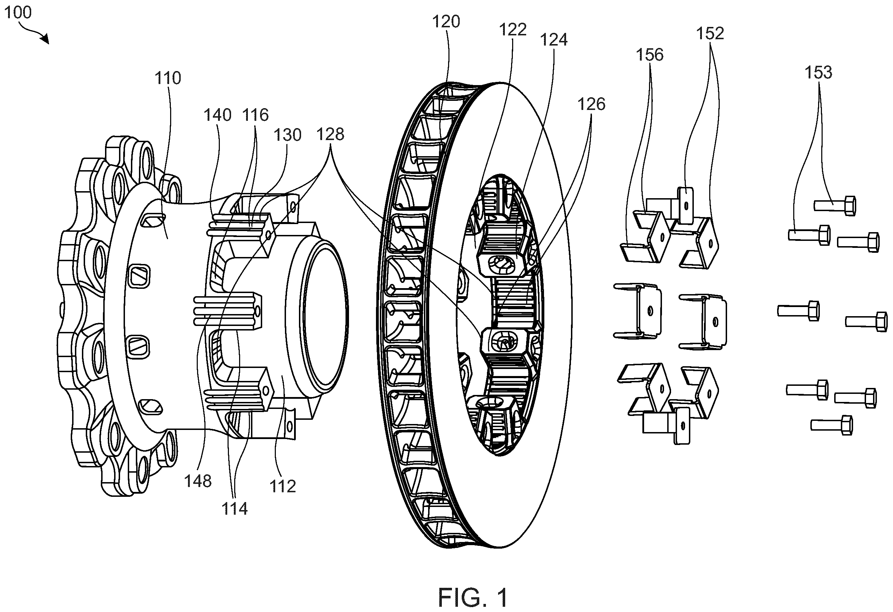

FIG. 1 is an exemplary disassembled view of a hub rotor assembly 100 for a vehicle according to an example. The hub rotor assembly 100 includes a hub 110 that includes a hub shaft 112 and a plurality of male hub splines 114 defining a plurality of hub contact surfaces 116. The hub rotor assembly 100 also includes a brake rotor 120 that includes a plurality of female rotor splines 124 arranged around a central opening 122 of the brake rotor 120 defining a plurality of rotor contact surfaces 126 that engage the plurality of hub contact surfaces 116 to define a plurality of hub rotor interfaces 128 that rotationally fix the brake rotor with respect to the hub.

In this example, the hub contact surfaces 116 may include a plurality of grooves 140 for providing air gaps 130 between the hub contact surfaces 116 and the rotor contact surfaces 126, i.e., at the hub rotor interfaces 128. Alternatively or in addition, the hub contact surfaces 116 may include a surface finish 148 with a roughness sufficient to provide the air gaps 130. For example, a surface finish 146 of Ra > 10 µm on one or both of the hub contact surfaces 116 and/or rotor contact surfaces 126 may provide sufficient air gaps 130. In some examples, a surface finish 146 of Ra > 6.3 may be sufficient. It should be understood that surface finishes having different roughnesses and/or types may be used as desired.

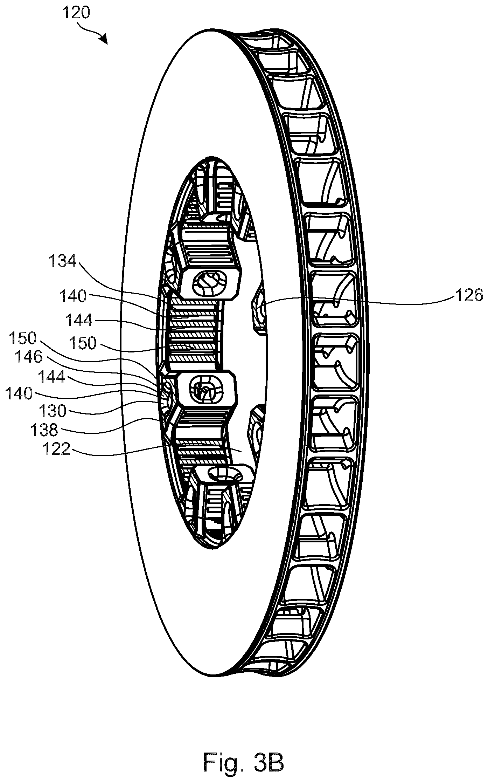

Alternatively or in addition, e.g., as shown in FIG. 3B below, the rotor contact surfaces may also include grooves and/or a surface finish 150 for providing the air gaps at the hub rotor interfaces 128. By providing air gaps 130 between the respective plurality of hub contact surfaces 116 and the respective plurality of rotor contact surfaces 128 of the hub rotor interfaces 128, heat transfer between the brake rotor 120 and the hub 110 may be inhibited.

In this example, the hub 110 may be formed from machined aluminum (e.g., cast aluminum with a machined finish), cast iron, or other materials. Some materials, such as aluminum, may have a higher strength to weight ratio and may allow for the hub 110 to have a reduced weight compared to a comparable hub made from another material, such as cast iron.

Meanwhile, the rotor 120 may be formed from cast iron to absorb and withstand the high amounts of heat generated during a braking operation. While a conventional cast iron hub may be able to absorb a large amount of this generated heat without danger of failure, the reduced mass of the aluminum hub 110 may make the hub 110 more prone to failure due to high temperatures.

Providing the air gaps 130 between the rotor 120 and the hub 110 has several benefits. For example, by the grooves 140 and/or finish 146 reduces the actual contact area between the rotor 110 and the hub 120, which reduces the rate of thermal conduction from the rotor 120 to the hub 110. The air gaps 130 provided by the grooves 140 and/or finish 146 may also provide additional ventilation for the hub rotor assembly, thereby further reducing the amount of heat transferred to the rotor 110.

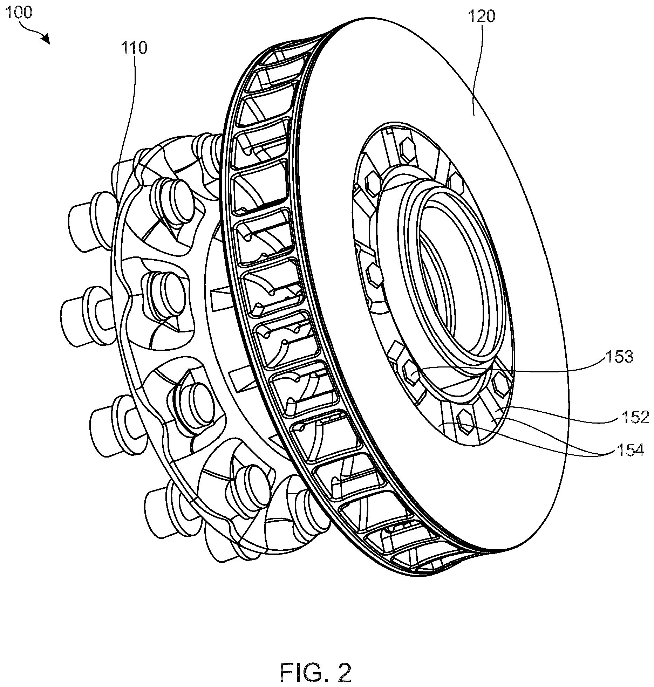

As further shown in FIG. 1, the rotor 120 may be secured to the rotor 110 by a plurality of retention clips 152, which may be secured to the rotor 110 by a plurality of bolts 153 to fix the rotor 120 with respect to the hub 110. In this example, the clips 152 may each include a plurality of protrusions 156 that are inserted into thermal expansion gaps between the male and female splines 114, 124, described in greater detail with respect to FIG. 2 below.

Referring now to FIG. 2, an exemplary assembled view of the hub rotor assembly 100 of FIG. 1 is illustrated, according to an example. As discussed above, the plurality of male hub splines 114 and the plurality of female rotor splines 124 define a plurality of thermal expansion gaps 154 therebetween. In this example, the protrusions 156 (see FIG. 1) of the retention clips 152 are inserted into respective thermal expansion gaps. 154 to inhibit rotation of the hub 110 and the rotor 120 with respect to each other while allowing for relative thermal expansion of the components. This is particularly beneficial where the hub 110 and rotor 120 are formed from different materials, such as machined aluminum and cast iron for example, which may have different rates of thermal expansion.

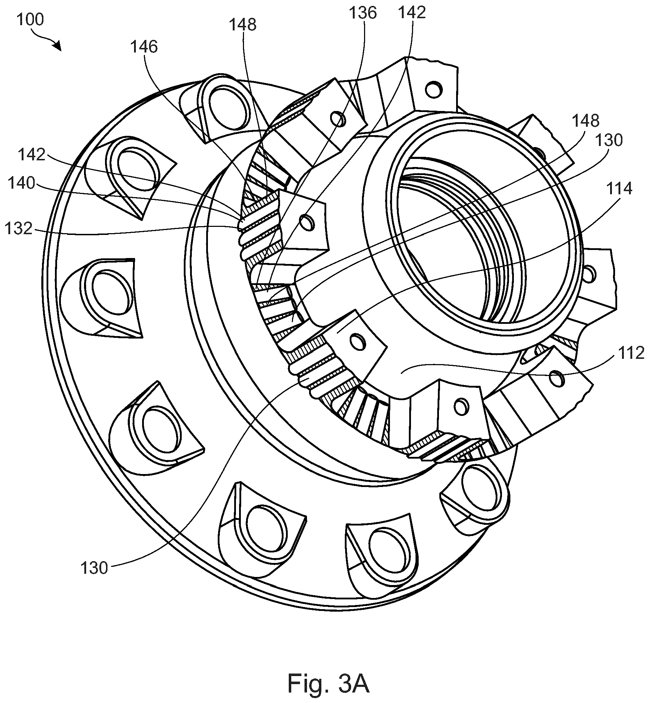

FIGS. 3A and 3B are exemplary views of a vehicle hub 110 and brake rotor 120', according to another exemplary embodiment. In this example, the vehicle hub 110 of FIG. 3A is the same component as shown in FIG. 1. As can be seen in FIG. 3A, the plurality of hub contact surfaces 116 includes a plurality of radial outer contact surfaces 132 of the plurality of male hub splines 114, and a plurality of axial inner contact surfaces 136 between adjacent pairs of hub splines 114. Each hub contact surface 116 may include a subset 142 of the plurality of grooves 140, and/or a surface finish 148 of sufficient roughness, to provide the air gaps 130. For example, in some embodiments, individual hub contact surfaces 116 may each include a single groove 140 or multiple grooves 140, as desired.

As shown in FIG. 3B, in this example, the plurality of rotor contact surfaces 126 of the rotor 120' may also include a plurality of radial inner contact surfaces 134 between adjacent pairs of rotor splines of the plurality of female rotor splines 124, and a plurality of axial outer contact surfaces 138 of the plurality of female rotor splines 124. In this example, the plurality of radial inner contact surfaces 134 may also include at least a subset 144 of the plurality of grooves 140 (e.g., with each contact surface 134 including one or more grooves 140), and/or a surface finish 150 of sufficient roughness, to provide the air gaps 130.

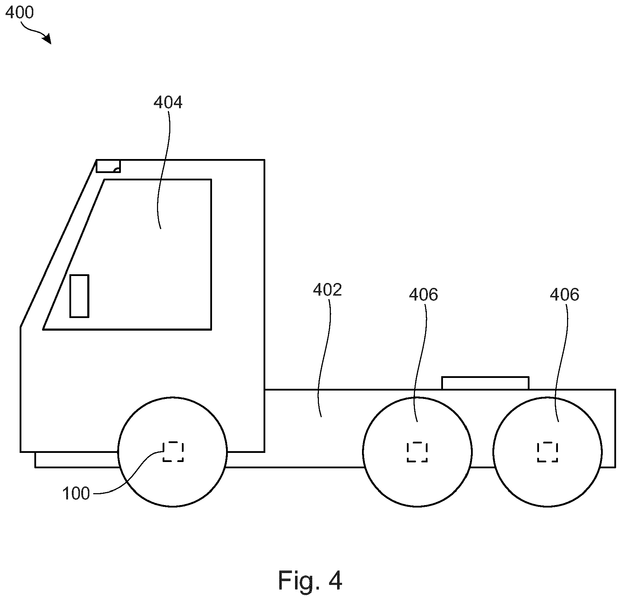

FIG. 4 is an exemplary view of a vehicle 400 having a brake rotor assembly 100, according to an example. In this example, the vehicle 400 is a commercial truck having a chassis 402, cab 404, and a plurality of wheels 406, each of which may be mounted to the chassis 402 via a hub rotor assembly 100 as described herein.

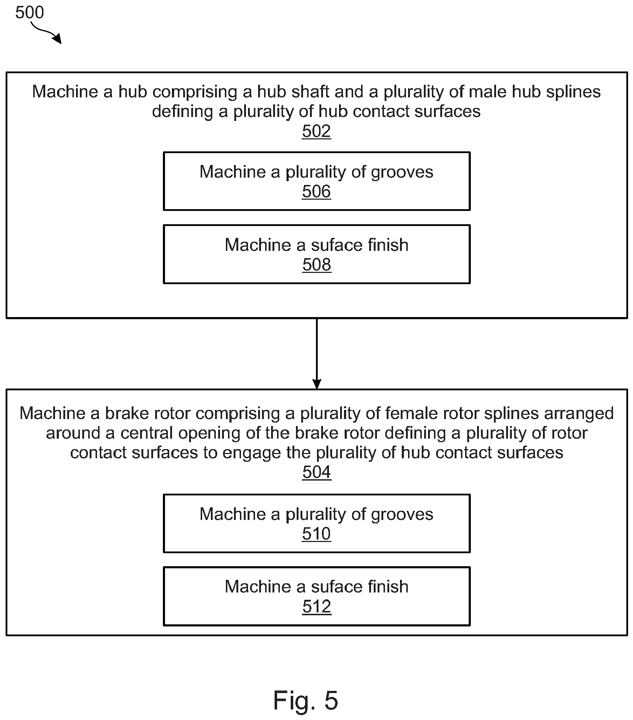

FIG. 5 is a flow chart of an exemplary method of operations 500 to form a brake rotor assembly, according to an example. The operations 500 may include machining a hub comprising a hub shaft and a plurality of male hub splines defining a plurality of hub contact surfaces. (Block 502).

The method may further include machining a brake rotor comprising a plurality of female rotor splines arranged around a central opening of the brake rotor defining a plurality of rotor contact surfaces to engage the plurality of hub contact surfaces (Block 504). As discussed above, the engagement of the rotor contact surfaces and the hub contact surfaces define a plurality of hub rotor interface that rotationally fix the brake rotor with respect to the hub, with each hub rotor interface defining a plurality of air gaps between the respective hub surface and the respective rotor surface of the hub rotor interface to inhibit heat transfer between the brake rotor and the hub. In this regard, in some embodiments, machining the hub may include machining a plurality of grooves (Block 506) and/or machining a surface finish (Block 508) on the plurality of hub contact surfaces to define the plurality of air gaps. Alternatively or in addition, in some embodiments machining the rotor may include machining a plurality of grooves (Block 510) and/or machining a surface finish (Block 510) on the plurality of rotor contact surfaces to define the plurality of air gaps.

Additional examples include:
Example 1. A hub rotor assembly (100) for a vehicle (400) comprising:
   a hub (110) comprising:
   a hub shaft (112); and
   a plurality of male hub splines (114) defining a plurality of hub contact surfaces (116); and
   a brake rotor (120) comprising:
   a plurality of female rotor splines (124) arranged around a central opening (122) of the brake rotor defining a plurality of rotor contact surfaces (126) that engage the plurality of hub contact surfaces to define a plurality of hub rotor interfaces (128) that rotationally fix the brake rotor with respect to the hub,
   each hub rotor interface defining a plurality of air gaps (130) between the respective plurality of hub contact surfaces and the respective plurality of rotor contact surfaces of the hub rotor interface to inhibit heat transfer between the brake rotor and the hub.
Example 2. The hub rotor assembly of example 1, wherein the plurality of hub contact surfaces comprises a plurality of radial outer contact surfaces (132) of the plurality of male hub splines, and
   wherein the plurality of rotor contact surfaces comprises a plurality of radial inner contact surfaces (134) between adjacent pairs of rotor splines of the plurality of female rotor splines.
Example 3. The hub rotor assembly of any of the preceding examples, wherein the plurality of hub contact surfaces comprises a plurality of axial inner contact surfaces (136) between adjacent pairs of hub splines of the plurality of male hub splines, and
   wherein the plurality of rotor contact surfaces comprises a plurality of axial outer contact surfaces (138) of the plurality of female rotor splines.
Example 4. The hub rotor assembly of any of the preceding examples, wherein each hub rotor interface comprises a plurality of grooves (140) defining the plurality of air gaps.
Example 5. The hub rotor assembly of example 4, wherein each hub contact surface comprises at least a subset (142) of the plurality of grooves.
Example 6. The hub rotor assembly of examples 4 or 5, wherein each rotor contract surface comprises at least a subset (144) of the plurality of grooves.
Example 7. The hub rotor assembly of any of the preceding examples, wherein each hub rotor interface comprises a surface finish (146) of Ra > 6.3 µm.
Example 8. The hub rotor assembly of example 7, wherein each hub contact surface comprises the surface finish (148) of Ra > 6.3 µm.
Example 9. The hub rotor assembly of examples 7 or 8, wherein each rotor contract surface comprises the surface finish (150) of Ra > 6.3 µm.
Example 10. The hub rotor assembly of any of examples 7-9, wherein each hub rotor interface comprises a surface finish of Ra > 10 µm.
Example 11. The hub rotor assembly of any of the preceding examples, wherein the hub is formed from machined aluminum.
Example 12. The hub rotor assembly of any of the preceding examples, wherein the brake rotor is formed from cast iron.
Example 13. The hub rotor assembly of any of the preceding examples, further comprising a plurality of retention clips (152) to secure the brake rotor to the hub.
Example 14. The hub rotor assembly of any of the preceding examples, wherein the plurality of male hub splines and the plurality of female rotor splines define a plurality of thermal expansion gaps (154) therebetween.
Example 15. The hub rotor assembly of example 14 when dependent from example 13, wherein each retention clip comprises a protrusion (156) for insertion into a respective thermal expansion gap.
Example 16. A method (500) of forming a hub rotor assembly for a vehicle comprising:
   machining a hub (502) comprising:
   a hub shaft; and
   a plurality of male hub splines defining a plurality of hub contact surfaces; and
   machining a brake rotor (504) comprising:
      a plurality of female rotor splines arranged around a central opening of the brake rotor defining a plurality of rotor contact surfaces to engage the plurality of hub contact surfaces to define a plurality of hub rotor interface that rotationally fix the brake rotor with respect to the hub,
      each hub rotor interface defining a plurality of air gaps between the respective hub surface and the respective rotor surface of the hub rotor interface to inhibit heat transfer between the brake rotor and the hub.
Example 17. The method of example 16, wherein the plurality of hub contact surfaces comprises a plurality of radial outer contact surfaces of the plurality of male hub splines, and
   wherein the plurality of rotor contact surfaces comprises a plurality of radial inner contact surfaces between adjacent pairs of rotor splines of the plurality of female rotor splines.
Example 18. The method of example 16 or 17, wherein the plurality of hub contact surfaces comprises a plurality of axial inner contact surfaces between adjacent pairs of hub splines of the plurality of male hub splines, and
   wherein the plurality of rotor contact surfaces comprises a plurality of axial outer contact surfaces of the plurality of female rotor splines.
Example 19. The method of any of examples 16-18, further comprising, for each hub rotor interface, machining a plurality of grooves (506, 510) to define the plurality of air gaps.
Example 20. The method of any of examples 16-19, further comprising, for each hub rotor interface, machining a surface finish (508, 512) to define the plurality of air gaps.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A hub rotor assembly (100) for a vehicle (400) comprising:
a hub (110) comprising:
a hub shaft (112); and
a plurality of male hub splines (114) defining a plurality of hub contact surfaces (116); and
a brake rotor (120) comprising:
a plurality of female rotor splines (124) arranged around a central opening (122) of the brake rotor defining a plurality of rotor contact surfaces (126) that engage the plurality of hub contact surfaces to define a plurality of hub rotor interfaces (128) that rotationally fix the brake rotor with respect to the hub,
each hub rotor interface defining a plurality of air gaps (130) between the respective plurality of hub contact surfaces and the respective plurality of rotor contact surfaces of the hub rotor interface to inhibit heat transfer between the brake rotor and the hub.

2. The hub rotor assembly of claim 1, wherein the plurality of hub contact surfaces comprises a plurality of radial outer contact surfaces (132) of the plurality of male hub splines, and
wherein the plurality of rotor contact surfaces comprises a plurality of radial inner contact surfaces (134) between adjacent pairs of rotor splines of the plurality of female rotor splines.

3. The hub rotor assembly of any of the preceding claims, wherein the plurality of hub contact surfaces comprises a plurality of axial inner contact surfaces (136) between adjacent pairs of hub splines of the plurality of male hub splines, and
wherein the plurality of rotor contact surfaces comprises a plurality of axial outer contact surfaces (138) of the plurality of female rotor splines.

4. The hub rotor assembly of any of the preceding claims, wherein each hub rotor interface comprises a plurality of grooves (140) defining the plurality of air gaps.

5. The hub rotor assembly of claim 4, wherein each hub contact surface comprises at least a subset (142) of the plurality of grooves.

6. The hub rotor assembly of claims 4 or 5, wherein each rotor contract surface comprises at least a subset (144) of the plurality of grooves.

7. The hub rotor assembly of any of the preceding claims, wherein each hub rotor interface comprises a surface finish (146) of Ra > 6.3 µm.

8. The hub rotor assembly of claim 7, wherein each hub contact surface comprises the surface finish (148) of Ra > 6.3 µm.

9. The hub rotor assembly of claims 7 or 8, wherein each rotor contract surface comprises the surface finish (150) of Ra > 6.3 µm.

10. The hub rotor assembly of any of claims 7-9, wherein each hub rotor interface comprises a surface finish of Ra > 10 µm.

11. The hub rotor assembly of any of the preceding claims, wherein the hub is formed from machined aluminum.

12. The hub rotor assembly of any of the preceding claims, wherein the brake rotor is formed from cast iron.

13. The hub rotor assembly of any of the preceding claims, further comprising a plurality of retention clips (152) to secure the brake rotor to the hub.

14. The hub rotor assembly of any of the preceding claims, wherein the plurality of male hub splines and the plurality of female rotor splines define a plurality of thermal expansion gaps (154) therebetween.

15. The hub rotor assembly of claim 14 when dependent from claim 13, wherein each retention clip comprises a protrusion (156) for insertion into a respective thermal expansion gap.

16. A method (500) of forming a hub rotor assembly for a vehicle comprising:
machining a hub (502) comprising:
a hub shaft; and
a plurality of male hub splines defining a plurality of hub contact surfaces; and machining a brake rotor (504) comprising:
a plurality of female rotor splines arranged around a central opening of the brake rotor defining a plurality of rotor contact surfaces to engage the plurality of hub contact surfaces to define a plurality of hub rotor interface that rotationally fix the brake rotor with respect to the hub,
each hub rotor interface defining a plurality of air gaps between the respective hub surface and the respective rotor surface of the hub rotor interface to inhibit heat transfer between the brake rotor and the hub.

17. The method of claim 16, wherein the plurality of hub contact surfaces comprises a plurality of radial outer contact surfaces of the plurality of male hub splines, and
wherein the plurality of rotor contact surfaces comprises a plurality of radial inner contact surfaces between adjacent pairs of rotor splines of the plurality of female rotor splines.

18. The method of claim 16 or 17, wherein the plurality of hub contact surfaces comprises a plurality of axial inner contact surfaces between adjacent pairs of hub splines of the plurality of male hub splines, and
wherein the plurality of rotor contact surfaces comprises a plurality of axial outer contact surfaces of the plurality of female rotor splines.

19. The method of any of claims 16-18, further comprising, for each hub rotor interface, machining a plurality of grooves (506, 510) to define the plurality of air gaps.

20. The method of any of claims 16-19, further comprising, for each hub rotor interface, machining a surface finish (508, 512) to define the plurality of air gaps.
